# EUROPÄISCHE PATENTSCHRIFT

(11) **EP 0 379 106 B1**
(45) Veröffentlichungstag und Bekanntmachung des Hinweises auf die Patenterteilung: **28.04.1993**
(21) Anmeldenummer: 90100685.8
(22) Anmeldetag: 13.01.1990
(51) Int. Cl.: F16L 37/12

(54) **Anschlussverbindungsstück**
Connection assembly
Assemblage de connexion

(30) Priorität: 19.01.1989 DE 3901466
(43) Veröffentlichungstag der Anmeldung: 25.07.1990
(73) Patentinhaber: Festo KG, D-73734 Esslingen (DE)
(72) Erfinder: Stoll, Kurt, Dipl.-Ing., D-7300 Esslingen (DE); Köngeter, Herbert, D-7313 Reichenbach (DE); Scheurenbrand, Hans, Prof.-Dr. Ing., D-7053 Kernen (DE)
(74) Vertreter: Magenbauer, Rudolf, Dipl.-Ing.

(56) Entgegenhaltungen:
- EP-A- 0 208 850
- CH-A- 278 093
- DE-A- 3 143 015
- DE-B- 2 622 269
- FR-A- 1 491 388
- GB-A- 2 086 514

## Beschreibung

Die Erfindung betrifft ein Anschlußverbindungsstück zur Verbindung von zur Führung eines Strömungsmediums geeigneten leitungsförmigen Bauteilen wie Druckmittelleitungen, Druckmittelschläuche oder dergleichen untereinander oder mit einem anderen insbesondere pneumatischen Bauelement, mit einem Halteteil, das mindestens eine Anschlußöffnung enthält, in die ein anzuschliessendes leitungsförmiges Bauteil mit einem Einsteckende lösbar einsteckbar ist, mit einer zum Teil innerhalb der Anschlußöffnung angeordneten, bei eingestecktem Einsteckende am Umfang des entsprechenden leitungsförmigen Bauteils angeordneten Spannzange, die zwei einander diametral gegenüberliegende Spannzangenelemente aufweist, die jeweils einen in der Anschlußöffnung angeordneten Klemmarm und in Verlängerung zu diesem einen Betätigungsarm mit einer außerhalb der Anschlußöffnung angeordneten Betätigungspartie aufweisen, wobei alle Spannzangenelemente über einen im Bereich zwischen den Klemmarmen einerseits und den Betätigungsarmen andererseits angeordneten ringförmigen Verbindungsabschnitt derart einstückig miteinander verbunden sind, daß die Klemmarme beim in Richtung zum eingesteckten leitungsförmigen Bauteil erfolgenden Bewegen der Betätigungsarme aus einer zuvor eingenommenen Spannstellung, in der eine an ihnen vorgesehene Klemmpartie nach radial innen gegen ein eingestecktes Einsteckende arbeitet, in eine das Einsteckende zur Entnahme freigebende Freigabestellung gebracht wird.

Ein Anschlußverbindungsstück dieser Art geht aus der DE-B-26 22 269 hervor. Es verfügt über ein Halteteil mit einem durchgehenden Kanal, der sich einenends zu einer Anschlußöffnung verbreitert, die von einem Deckel verschlossen ist. Letztere weist eine Einstecköffnung auf, durch die hindurch das Einsteckende eines leitungsförmigen Bauteils einführbar ist. Unter Vermittlung einer teilweise innerhalb der Anschlußöffnung angeordneten Spannzange läßt sich das eingesteckte Einsteckende lösbar gegenüber dem Halteteil fixieren, indem in einer Spannstellung Klemmpartien der Spannzange gegen den Außenumfang des Einsteckendes gedrückt werden. Durch Drücken von Betätigungsarmen der Spannzange wird das Einsteckende freigegeben, und das leitungsförmige Bauteil läßt sich entnehmen.

Das bekannte Anschlußverbindungsstück baut relativ breit, wofür die durch seitliche Öffnungen des Halteteils radial nach außen ragenden Betätigungsarme verantwortlich sind. Außerdem ist ein die Anschlußöffnung lösbar verschließender Deckel notwendig, um die Montage der Spannzange am Halteteil überhaupt zu ermöglichen. Die Anzahl der erforderlichen Bauteile ist dadurch für ein Anschlußverbindungsstück relativ hoch und die Montage der Spannzange und des Deckels erfordert einen beträchtlichen Zeitaufwand. Ein Weglassen des Deckels ist praktisch nicht möglich, da er als stabilisierendes Bauteil benötigt wird. Er verhindert einerseits das Abknicken einer eingesteckten Leitung und bildet andererseits ein Halteelement in Bezug auf die Spannzange, die bei nicht vorhandenem Deckel aus der Anschlußöffnung herausfallen würde. Nichtsdestotrotz ist die Spannzange geringfügig axial gegenüber dem Halteteil verlagerbar, selbst in der Spannstellung der Klemmpartien, da die Betätigungsarme das Halteteil mit Axialspiel durchgreifen, um radial verschwenkbar zu sein. Dies führt dazu, daß das festgeklemmte Einsteckende durchaus axial gerichtete Relativbewegungen bezüglich des Halteteils ausführen kann, was vor allem bei pulsierender Beaufschlagung der Leitungskanäle der Fall sein wird. Abgesehen von einem dadurch bedingten erhöhten Verschleiß eines am Halteteil festgelegten Dichtringes kann dabei auch das Einsteckende beschädigt werden, da die Klemmpartien wegen des Zurückbiegens der Betätigungsarme stark in die Wandung des Einsteckendes eingedrückt werden. Verlagert sich hingegen das Einsteckende axial nach innen, so kann dies wegen des Kontaktes zwischen den Betätigungsarmen und dem Halteteil sogar einen Freigabevorgang der Spannzange auslösen. Da die Spannzange letztlich im wesentlichen nur aus einer leicht gewölbten Blattfeder besteht, dürften die Betätigungskräfte relativ hoch sein, was den Bedienungskomfort schmälert.

Es ist daher die Aufgabe der vorliegenden Erfindung, ein Anschlußverbindungsstück gemäß der eingangs genannten Art zu schaffen, das bei teilearmem Aufbau und einfacher Montage kompakte Radialabmessungen aufweist und bei geringen Betätigungskräften einen sicheren Halt des eingesteckten Einsteckendes selbst bei Druckbeaufschlagung gewährleistet.

Diese Aufgabe wird dadurch gelöst, daß die Spannzange mit ihren Betätigungspartien an der Einsteckseite aus der Anschlußöffnung des Halteteils herausragt, wobei die Betätigungspartien in der Spannstellung der zugeordneten Klemmarme gesehen eine Bewegung nach radial innen erlaubend mit Betätigungsabstand zum Umfang des eingesteckten leitungsförmigen Bauteils angeordnet sind, und daß der als Ringkörper ausgebildete Verbindungsabschnitt eine bogenförmige Querschnittsgestalt hat und sowohl eine Halterungspartie zur unverlierbaren Halterung der Spannzange am Halteteil als auch den Schwenkbereich für die zwischen der Spannstellung und der Freigabestellung bewegbaren Klemmarme bildet, wobei er formschlüssig in bzw. auf einer entsprechenden Halteausnehmung oder einem Vorsprung des Halteteils sitzt und die Betätigungsarme und Klemmarme an den Endbereichen der einander entgegengesetzten Bogenabschnitte des Ringkörpers angeordnet sind.

Nunmehr liegt eine im wesentlichen hülsenartige Spannzange vor, die geringe radiale Abmessung besitzt. Die Spannzangenelemente erstrecken sich im wesentlichen in Längsrichtung der Anschlußöffnung, so daß sie im Bereich der Einstecköffnung aus der Anschlußöffnung herausragen und keine zusätzlichen Ausnehmungen am Halteteil erforderlich sind. Ein zusätzlicher Deckel erübrigt sich damit. Der als Ringkörper ausgebildete Verbindungsabschnitt zwischen den Klemm- und Betätigungsarmen hat eine Doppelfunktion, indem er sowohl als Haltepartie zur lösbaren Halterung gegenüber dem Halteteil fungiert, als auch das Bewegungslager für die Schwenkbewegung der Klemmarme und der Betätigungsarme bildet. In Kombination mit einer entsprechend gestalteten Halteausnehmung oder einem Vorsprung des Halteteils, bewirkt der Ringkörper eine formschlüssige sichere Fixierung der Spannzange. Der radiale Betätigungsabstand zwischen den Betätigungspartien und dem Umfang des jeweils eingesteckten leitungsförmigen Bauteils gewährleistet ausreichend Platz für die zuverlässige Vornahme eines Wechsels zwischen der Spannstellung und der Freihaltestellung, im Verein mit der bogenförmigen Querschnittskontur des Ringkörpers, die bei geringen Betätigungskräften eine federnde Übertragung der Schwenkbewegung zwischen den Betätigungsarmen und den Klemmarmen gewährleistet.

Aus der DE-A-31 43 015 geht bereits ein Steckverbinder hervor, der mit einer Haltevorrichtung mit über einen ringförmigen Verbindungsabschnitt miteinander verbundenen Betätigungsarmen und Abstützarmen ausgestattet ist. Zwar erfolgt hier ein Verbringen der Abstützarme zwischen ihrer wirksamen und ihrer unwirksamen Stellung ähnlich wie bei der erfindungsgemäßen Spannzange durch radiales Bewegen der Betätigungsarme. Jedoch sind die Abstützarme nicht geeignet, radiale Klemmkräfte auf eine eingesteckte Leitung auszuüben, sondern bedürfen zu ihrer Funktionsfähigkeit eines ringförmigen Radialvorsprunges, der an der Leitung angeformt sein muß. Dies steht einer universellen Verwendbarkeit entgegen. Abgesehen davon ist der ringförmige Verbindungsabschnitt im Querschnitt gesehen linear stegförmig ausgebildet, so daß unter anderem mit höheren Betätigungskräften gerechnet werden dürfte.

Auch im Falle der FR-A-1 491 388 und der CH-A-278 093 erfolgt die Festlegung des eingesteckten leitungsförmigen Bauteils durch Hintergreifen von an diesem angeordneten Radialvorsprüngen seitens eines Haltemechanismus. Letzterer ist relativ aufwendig, da er an Stiften verschwenkbar gelagerte Halteelmente benötigt, zu deren Vorspannung in die wirksame Stellung überdies zusätzliche Federn benötigt werden.

In der EP-A-0 208 850 erfolgt die Befestigung eingesteckter leitungsförmiger Bauteile durch eine Rastverbindung, wobei eine spannzangenartige Haltevorrichtung ebensowenig vorhanden ist wie im Falle der GB-A-2 086 514.

Vorteilhafte Weiterbildungen der Erfindung sind in den Unteransprüchen aufgeführt.

Anhand einiger Ausführungsbeispiele soll die Erfindung nachfolgend unter Bezugnahme auf die beigefügte Zeichnung näher erläutert werden. In letzterer zeigen:

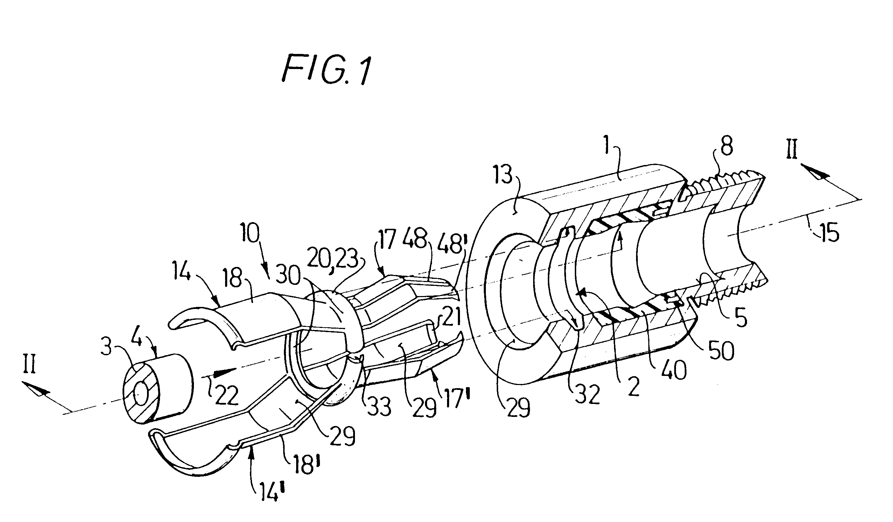

- Figur 1: eine bevorzugte Ausführungsform eines Anschlußverbindungsstückes in perspektivischer Explosionsdarstellung, teilweise aufgebrochen,
- Fig. 2: das Anschlußverbindungsstück aus Fig. 1 in montiertem Zustand mit einsitzendem Einsteckende im Längsschnitt gemäß Schnittlinie II-II aus Fig. 1
- Fig. 3: eine vergrößerte Darstellung des Verbindungsbereiches der Klemm- und Betätigungsarme der Spannzange, wobei in durchgezogenen Linien die in der Spannstellung eingenommene Lage und in gestrichelten Linien die bei gedrücktem Betätigungsarm von der Spannzange eingenommene Lage angedeutet ist,
- Fig. 4 u. 5: weitere Ausführungsbeispiele des Anschlußverbinungsstückes.

Das erfindungsgemäße Anschlußverbindungsstück enthält ein Halteteil 1, das mindestens eine Anschlußöffnung 2 enthält, in die ein anzuschließendes leitungsförmiges Bauteil 3 mit einem Einsteckende 4 lösbar einsteckbar ist. Unter dem Begriff "leitungsförmiges Bauteil" sollen hierbei Druckmittelschläuche, Druckmittelleitungen oder ähnliche Körper mit im Bereich des Einsteckendes 4 insbesondere zylindrischer Außenkontur verstanden werden.

Beim Ausführungsbeispiel ist die Anschlußöffnung 2 vom einen Endbereich eines das Halteteil 1 linear durchziehenden Durchgangskanals 5 gebildet, der andererseits an einer Montageseite 6 ausmündet. Mit dieser läßt sich das Halteteil 1 an einem nicht näher dargestellten Bauelement, z.B. einem Ventil, einem Zylinder oder dergleichen lösbar festlegen, um den Durchgangskanal 5 und den Leitungskanal 7 des eingesteckten leitungsförmigen Bauteils 3 mit diesem Bauelement zu verbinden. Der der Montageseite 6 zugeordnete Halteteilbereich ist deshalb beim Ausführungsbeispiel in Art eines Gewindestutzens 8 gestaltet, der in eine entsprechende Gewindeöffnung des nicht dargestellten Bauteiles lösbar einschraubbar ist. Um den Einschraubvorgang zu erleichtern, kann wie beim abgebildeten Ausführungsbeispiel die zylindrische Außenkontur der auf den Gewindestutzen 8 folgenden Halteteilpartie 9 so gestaltet sein, daß sich ein Schraubwerkzeug ansetzen läßt. Nur beispielhaft sei an dieser Stelle auf ein mögliches Mehrkantprofil verwiesen (nicht dargestellt).

Selbstverständlich kann das Anschlußverbindungsstück auch als Leitungskupplung ausgebildet sein, in welchem Falle der Gewindestutzen 8 entfällt und auch der montageseitige Mündungsbereich des Durchgangskanals 5 als Anschlußöffnung zur Aufnahme des Einsteckendes eines leitungsförmigen Bauteils 3 ausgebildet ist.

Daneben ist es durchaus möglich, das Halteteil mit einem verzweigten Durchgangskanal 5 zu versehen, wobei dann verschiedenen der Mündungen eine Anschlußöffnung bzw. eine Montageseite zugeordnet sein kann.

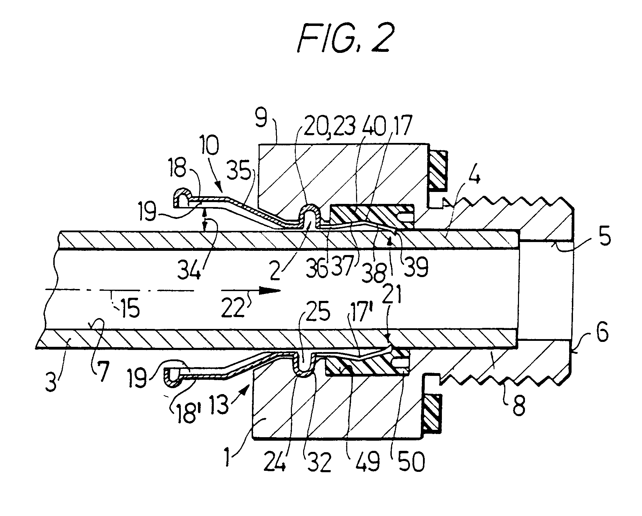

In der jeweiligen Anschlußöffnung, beim Ausführungsbeispiel in der einzigen Anschlußöffnung 2, ist eine Spannzange 10 gehaltert, die zum Teil an der der Montageseite 6 entgegengesetzten Einsteckseite 13 des Halteteils 1 aus der Anschlußöffnung 2 herausragt. Bei eingestecktem leitungsförmigem Bauteil 3 gesehen, befindet sich die Spannzange 10 im Bereich des Außenumfanges dieses Bauteils 3, wie dies die Fig. 2 verdeutlicht.

Die Spannzange 10 verfügt über mehrere Spannzangenelemente 14,14', beim Ausführungsbeispiel über 2 Stück, die einander diametral gegenüberliegend in der Aufnahmeöffung 2 angeordnet sind. Sie erstrecken sich jeweils im wesentlichen - abgesehen von einigen Abknickungen oder dergleichen - in Längsrichtung 15 der Anschlußöffnung 2 und sind entlang des Umfanges der Anschlußöffnung 2 verteilt.

Jedes Spannzangenelement 14,14' enthält einen Klemmarm 17,17', der sich vollständig im Innern der Anschlußöffnung 2 befindet. Ferner verfügt jedes Spannzangenelement 14,14' über einen Betätigungsarm 18,18', der an der Einsteckseite 13 aus der Anschlußöffnung 2 herausragt, wobei der herausragende Bereich eine Betätigungspartie 19 enthält. Die einzelnen Betätigungsarme 18,18' sind jeweils in axialer Verlängerung zum zugeordneten Klemmarm 17,17' ausgerichtet, über einen Verbindungsabschnitt 20 sind die beiden Arme eines jeweiligen Spannzangenelementes 14,14' fest miteinander verbunden.

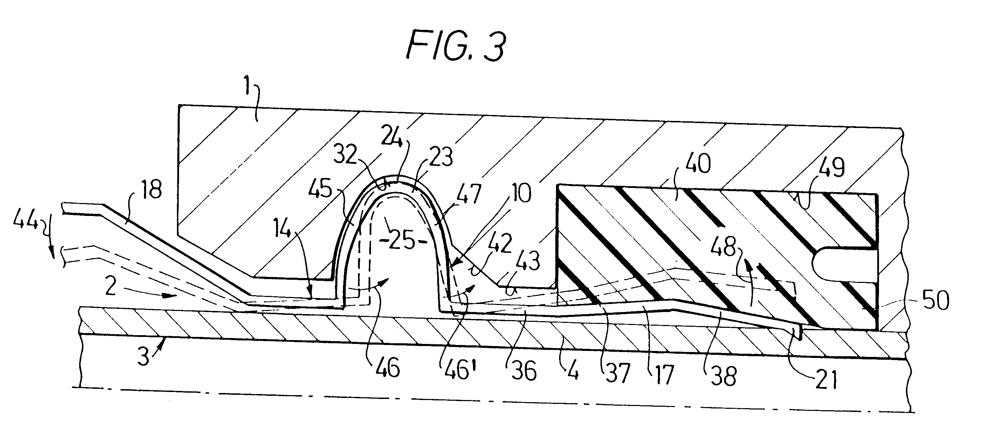

Die Klemmarme 17,17' sind zwischen einer in Fig. 2 abgebildeten Spannstellung und einer in Fig. 3 in gestrichelten Linien angedeuteten Freigabestellung bewegbar. Jeder Klemmarm 17,17' verfügt über eine beim Ausführungsbeispiel am freien, ins Innere der Anschlußöffnung 2 weisenden Endbereich vorgesehene Klemmpartie 21, die in der Spannstellung nach radial innen mit Bezug zur Längsachse 15 gegen den Umfang eines eingesteckten Einsteckendes 4 arbeitet. Die beiden Klemmpartien 21 sind in dieser Stellung also einander angenähert und vom Umfang 16 der Anschlußöffnung 2 weiter entfernt. In der Freigabestellung ist der Abstand zwischen den beiden Klemmpartien 21 vergrößert, sie sind jeweils dem benachbarten Bereich des Öffnungsumfanges 16 angenähert und erlauben eine problemlose Entnahme des Einsteckendes 4 durch Herausziehen.

Beim Ausführungsbeispiel sind die Spannzangenelemente 14,14' so ausgebildet, daß die Klemmarme 17,17' bei eingestecktem Einsteckende 4 automatisch die Spannstellung einnehmen, die sie zweckmäßigerweise auch bei entnommenem Einsteckende 4 beibehalten.

Ein Vorteil der Erfindung liegt in der einfachen Betätigungsweise der Spannzange 10. Denn die Klemmarme und Betätigungsarme eines jeweiligen Spannzangenelementes 14,14' sind so miteinander verbunden, daß beim Bewegen der Betätigungsarme 18,18' nach radial innen in Richtung zur Längsachse 15 die Klemmarme 17,17' aus der Spannstellung in die Freigabestellung bewegt werden. Diese behalten sie bei, solange die Betätigungsarme 18,18' gedrückt gehalten werden.

Es ist von Vorteil, wenn die Spannzange einstückig ausgebildet ist, so daß sie ein in der Aufnahmeöffnung einsitzendes Einsteckende zumindest zum Großteil umschließt. Dies vereinfacht sowohl die Montage als auch die Bedienbarkeit.

Nachfolgend soll sich eine detailliertere Beschreibung der beim Ausführungsbeispiel verwendeten Spannzange 10 anschließen, wobei auf den in der Anschlußöffnung 2 gehalterten Zustand Bezug genommen wird.

In Einsteckrichtung 22 gesehen vermittelt die Spannzange 10 den Eindruck eines ringförmigen Bauteils. Dabei rührt dieser Eindruck von einem Ringkörper 23 her, der den alle Spannzangenelemente und die jeweiligen beiden Arme 17,18 bzw. 17', 18' der Spannzangenelemente 14,14' miteinander verbindenden Verbindungsabschnitt 20 der Spannzange 10 bildet. Der Ringkörper 23 ist koaxial zur Anschlußöffnung 2 angeordnet, so daß sich ausgehend von ihm die beiden Arme des jeweiligen Spannzangenelementes in entgegengesetzte Axialrichtungen erstrecken. Der Ringkörper hat im Querschnitt - d.h. bei einem Schnitt entlang einer sich axial und radial mit Bezug zur Längsachse 15 erstreckenden Ebene - eine bogenförmige Gestalt in Art eines U oder V, wobei die Öffnung des vom Bogen 24 umgebenen Ringraumes 25 radial nach innen hin zum hindurchgesteckten Einsteckende 4 weist.

Die Klemm- und Betätigungsarme 17,18 bzw. 17', 18' eines jeweiligen Spannzangenelementes 14,14' sind an den einander entgegengesetzten Endbereichen des Bogens 24, d.h. im Bereich der der Öffnung des Ringraumes 25 benachbarten umlaufenden Kanten des Ringkörpers 23 einstückig angeformt.

Auch die Klemmarme 17, 17' und die Betätigungsarme 18, 18' sind in Umfangsrichtung des Ringkörpers 23 gekrümmt, wobei der Krümmungsradius zumindestens in den vom Ringkörper 23 abliegenden Bereichen auch größer oder kleiner sein kann. Die Krümmung hat den Vorteil, daß sich die Klemmpartien 21 über einen größeren Umfangsbereich des Einsteckendes 4 erstrecken können, so daß eine bessere Klemmung erzielt wird. Außerdem wird ein größtmöglicher Bewegungsbereich für die Betätigungspartien 19 gegenüber dem eingesteckten leitungsförmigen Bauteil 3 erzielt.

Die in Umfangsrichtung der Anschlußöffnung 2 gemessene Erstreckung der jeweils auf einer Axialseite des Ringkörpers 23 angeordneten Arme 17, 17' bzw. 18,18' ist im Anschlußbereich zum Ringkörper 23 in der Summe geringer als diejenige des Ringkörpers 23 selbst. Daher ergeben sich in Umfangsrichtung zwischen den einander diametral gegenüberliegenden Armen relativ große armfreie Bereiche 29, die nur von Abschnitten 30 des Ringkörpers 23 überbrückt werden.

Wie bereits erwähnt, ist die Spannzange 10 vorzugsweise unverlierbar und doch entnehmbar in der Anschlußöffnung 2 des Halteteils 1 gehaltert. Beim Ausführungsbeispiel erfolgt dies mittels einer Rast- oder Schnappverbindung, wobei der Verbindungsabschnitt 20 bzw. Ringkörper 23 vorzugsweise ein an dieser Verbindung beteiligtes Befestigungsteil bildet. Die Halterung am Halteteil 1 erfolgt also im Bereich des Verbindungsabschnittes 20 zwischen den beiden Armen 17, 18 bzw. 17', 18' eines jeweiligen Spannzangenelementes 14, 14'.

Infolge der oben beschriebenen, im Querschnitt bogenförmigen Gestaltung des Ringkörpers 23, stellt dieser einen umlaufenden und radial nach außen ragenden Befestigungsvorsprung dar. Die sich anschließenden benachbarten Bereiche der Arme 17, 17', 18, 18' sind demgegenüber nach radial innen zurückversetzt und befinden sich auf Höhe der nach innen weisenden Ringkörperränder. In das Halteteil 1 ist am Umfang 16 der Anschlußöffnung 2 eine der Außenkontur des Ringkörpers 23 entsprechende ringförmige Halteausnehmung 32 eingeformt, in der der Ringkörper 23 in montiertem Zustand der Spannzange 10 formschlüssig gehaltert einsitzt.

In diesem Zusammenhang ist es von besonderem Vorteil, wenn der Verbindungsabschnitt 20 bzw. Ringkörper 23 an einer Stelle zwischen den beiden Spannzangenelementen 14, 14' unterbrochen und offen ist. Dies ist beim Ausführungsbeispiel der Fall, bei dem einer der Verbindungsabschnitte 30 unterbrochen ist und sich im demontierten Zustand der Spannzange 10 im Bereich dieser Unterbrechung ein das ringförmige Gebilde öffnender Spalt 33 befindet. Der Ringkörper 23 ist nun federnd ausgebildet und die in Umfangsrichtung des Ringkörpers 23 gemessene Spaltbreite ist so gewählt, daß bei durch Kraftaufbringung von außen auf etwa Null verringerte Spaltbreite ein Einschieben der Spannzange 10 in die Anschlußöffnung 2 ohne Behinderung durch den Ringkörper 23 möglich ist. Erreicht der Ringkörper 23 beim Einschieben die Stelle der Halteausnehmnung 32, dann schnappt er unter federelastischer Aufweitung in diese ein und die Spannzange 10 ist in Axialrichtung 15 unverschiebbar fixiert.

Die Betätigungsarme 18, 18' sind so geformt, daß sie in der montierten Stellung der Spannzange 10 ausgehend vom Ringkörper 23 entgegen der Einsteckrichtung 22 im wesentlichen schräg nach radial außen gespreizt sind. Dadurch stellt sich zwischen den Betätigungspartien 19 und dem zugewandten Umfangsbereich des eingesteckten leitungsförmigen Bauteils in der Spannstellung gesehen ein Betätigungsabstand 34 ein, der ein ungehindertes Nach-Innen-Bewegen der Betätigungsarme 18, 18' in einem Maße ermöglicht, das ein Verbringen der Klemmarme in die Freigabestellung garantiert.

Bei eingesetztem Einsteckende 4 betrachtet, verfügen die Betätigungsarme 18, 18' beim Ausführungsbeispiel über eine sich an den Ringkörper 23 anschließende kurze Partie mit zur Längsachse 15 in etwa parallelem Verlauf, woran sich eine Schrägpartie 35 ansetzt, die axial vom Halteteil 1 weg und gleichzeitig radial nach außen verläuft, um letztendlich in die sich wiederum axial erstreckende Betätigungspartie 19 überzugehen. Um Verletzungen zu vermeiden, kann der Abschluß wulstförmig ausgestaltet sein.

Auch die Klemmarme 17, 17' beginnen ringkörperseitig mit einer kurzen, sich axial erstreckenden Partie 36, an die sich eine Schrägpartie 37 mit axial in Richtung zur Montageseite 6 und radial nach außen gerichtetem Verlauf anschließt, die in eine entgegengesetzt geneigte zweite Schrägpartie 38 übergeht, die sich ebenfalls in Richtung zur Montageseite 6 erstreckt gleichzeitig jedoch radial nach innen hin zur Längsachse 15 gerichtet ist. Der Endbereich dieser zweiten Schrägpartie 38 stellt die Klemmpartie 21 dar, an der, wie abgebildet, Haltemittel 39 angeordnet sind, die sich in die Wandung des Einsteckendes 4 eingraben können. Im Ausführungsbeispiel handelt es sich um einen der gebogenen Klemmarmkontur folgenden Zahn, der radial nach innen und in Einsteckrichtung weist, um sich bei auf das Einsteckende 4 ausgeübtem Zug entgegen der Einsteckrichtung 22 in der Wandung des Einsteckendes 4 zu verkeilen. Es versteht sich, daß auch mehrere Zähne, Einzelzähne, Verzahnungen oder dergleichen mehr zur formschlüssigen Unterstützung des Spannprozesses an der Klemmpartie 21 vorgesehen sein können.

Anhand der Fig. 3 soll nun kurz die Funktionsweise des erfindungsgemäßen Anschlußverbindungsstückes erläutert werden. Darin ist in durchgezogenen Linien die von der Spannzange 10 bzw. eines deren Spannzangenelementen 14 in der Spannstellung des zugeordneten Klemmarmes 17 eingenommene Position abgebildet. Die Klemmpartie 21 arbeitet unter Vorspannung gegen das Einsteckende 4, welche Vorspannung durch die federnde Gestaltung der Spannzange und unter Umständen auch, wie später noch erläutert wird, von einem elastisch nachgiebigen Ringelement 40 geliefert wird. Der in der Halteausnehmung 32 fixierte Ringkörper 23 umschließt zusammen mit den angrenzenden Partien der Arme 17, 18 das Einsteckende 4, wobei gewisses Spiel vorhanden sein kann. Jedenfalls ist radiales Bewegungsspiel im Bereich zwischen der auf den Ringkörper 23 folgenden Klemmarmpartie 36 und der dieser zugeordneten Umfangspartie 43 der Aufnahmeöffnung 2 vorhanden. Wird nun der Betätigungsarm 18 gemäß Pfeil 44 nach innen gedrückt, dann wird gleichzeitig der zugewandte Bogenabschnitt 45 des Ringkörpers 23 gemäß Pfeil 46 federnd in Richtung zum gegenüberliegenden Bogenabschnitt 47 tordiert. Dieser wiederum biegt sich deshalb in die gleiche Richtung 46', wodurch der angeformte Klemmarm 17 gemäß Pfeil 48 angehoben und vom Einsteckende 4 weg in die Freigabestellung bewegt wird. Die erhaltene Endstellung ist in gestrichelten Linien dargestellt, man sieht, daß sich die Achse für die Schwenkbewegung des Klemmarmes 17 im Bereich des Ringkörpers 23 befindet. Auch erkennt man, daß das oben erwähnte Bewegungsspiel die Schwenkbarkeit des Klemmarmes 17 erleichtert. Zusätzlich kann aber der Übergang zwischen der Halteausnehmung 32 und dem Umfangsbereich 43 abgeschrägt sein (bei 42),so daß die Bewegbarkeit des zugeordneten Bogenabschnittes 47 gewährleistet ist.

Wird der Betätigungsarm 18 losgelassen, so gelangt die gesamte Anordnung automatisch in die Ausgangsstellung zurück.

Eine verbesserte Klemmung wird erzielt, wenn die Klemmarme 17, 17' mehrteilig sind und aus mehreren in Umfangsrichtung der Anschlußöffnung nebeneinander angeordneten Klemmsegmenten 48, 48' bestehen, die wie beim Ausführungsbeispiel einander gegenüber zweckmäßigerweise beabstandet sind, um unabhängig voneinander freie Bewegbarkeit zu gewährleisten. Beim Ausführungsbeispiel besteht jeder Klemmarm aus zwei Klemmsegmenten 48, 48', die beispielsweise durch Einbringen eines Längsschlitzes in einen zuvor einteiligen Klemmarm hergestellt sein können.

Wie bereits oben angedeutet, ist es von Vorteil, wenn in der Aufnahmeöffnung 2 ein die Spannzange 10 im Bereich der Klemmarme 17, 17' radial außen umgebendes Ringelement 40 angeordnet ist. Es sitzt zweckmäßigerweise in einer nutförmigen Umfangsvertiefung 49 der Anschlußöffnung 2 ein. Es hat die Gestalt eines Hohlzylinders, der zwischen den Klemmarmbereich und den zugeordneten Umfangsbereich der Anschlußöffnung 2 koaxial zwischengefügt ist. Das Ringelement 40 besteht aus elastisch nachgiebigem Material, insbesondere Material mit gummielastischen Eigenschaften. Seine Abmessungen und seine Lage gegenüber den Klemmarmen 17, 17' ist so gewählt, daß diese von ihm bei nicht betätigten Betätigungsarmen 18, 18' zweckmäßigerweise zusätzlich oder ausschließlich in die Spannstellung gezwungen werden. Wie die Figur 2 verdeutlicht, nimmt das Ringelement 40 klemmarmseitig die Kontur der Klemmarme ein.

Beim Verbringen der Klemmarme 17, 17' in die Freigabestellung muß somit zusätzlich die elastische Kraft des Ringelementes 40 überwunden werden, das außerdem eine zwangsweise Koppelung sämtlicher Spannzangenelemente bewirkt.

Je nach Ausführungsform kann sich das Ringelement 40 entlang eines mehr oder weniger großen Längenabschnittes des Klemmarmbereiches der Spannzange 10 erstrecken.

Bei alledem ist es von Vorteil, wenn die Arme der Spannzange 10 und insbesondere die gesamte Spannzange federnd ausgebildet ist. Beispielsweise kann die Spannzange ein einteiliges Blechbiegeteil aus nichtrostendem Stahl sein. Von Vorteil ist es, wenn es sich um federndes Material handelt, wobei auch die Verwendung von Federstahl oder eines federnden Kunststoffmaterials angebracht ist. Zur Abdichtung des Einsteckendes 4 gegenüber dem Halteteil 1 ist in der Aufnahmeöffnung vorzugsweise ein das eingesteckte Einsteckende 4 koaxial umgebender Dichtring 50 angeordnet, der zur Erzielung einer dicht-dynamischen Abdichtung als Lippenring ausgebildet sein kann.

Die Zeichnung zeigt eine vorteilhafte Ausbildung, bei der er einstückig mit dem Ringelement 40 ausgebildet und sich in Axialrichtung an die freien Endbereiche der Klemmarme 17, 17' diese axial überragend anschließt. Zweckmäßigerweise wird man für dieses Kombiteil insgesamt einen Dichtring verwenden, so daß das Ringelement 40 Bestandteil des Dichtringes ist.

Das erfindungsgemäße Anschlußverbindungsstück baut sehr kurz und die Spannzange verfügt über nur geringe radiale Abmessungen, so daß bei optimalem Durchflußquerschnitt geringe Durchmesserabmessungen realisiert werden können.

Das erfindungsgemäße Anschlußverbindungsstück eignet sich insbesondere für leitungsförmige Bauteile mit aus Kunststoffmaterial bestehenden Einsteckenden, obwohl auch bei anderen Materialien eine gute Klemmung erzielt wird. Hinsichtlich des Ringelementes40 sei noch nachgetragen, daß es sich bei ihm auch um ein Formstück handeln kann, dessen Innenumfang bereits an die abgeknickte Kontur der Klemmarme angepaßt ist. In diesem Fall hat der Ringkörper 40 - an den vorzugsweise der Dichtring 50 einstückig angeformt ist - insbesondere die Gestalt eines Hohlzylinders mit sich ausgehend von den axialen Endbereichen in Richtung zur Längsmitte verringernder Wandstärke, wobei im im wesentlichen knickförmigen mittleren Bereich geringster Wandstärke der Knickbereich zwischen den beiden Schrägabschnitten 37, 38 der Klemmarme 17, 17' zu liegen kommt (vgl. auch Fig. 3).

Von besonderem Vorteil ist beim Ausführungsbeispiel, daß zum Dichten, Klemmen bzw. Spannen und Lösen eines leitungsförmigen Bauteiles nur zwei Teile notwendig sind.

Wesentlich ist auch, daß das Anschlußstück in ein anderes Bauteil bzw. ein Gehäuse o.dgl. dessen integriert bzw. daran angeformt sein kann. In diesem Fall fällt das Einschraubteil 8 weg, und an den Durchgangskanal schließt sich unmittelbar ein Bauteil- oder Gehäusekanal an.

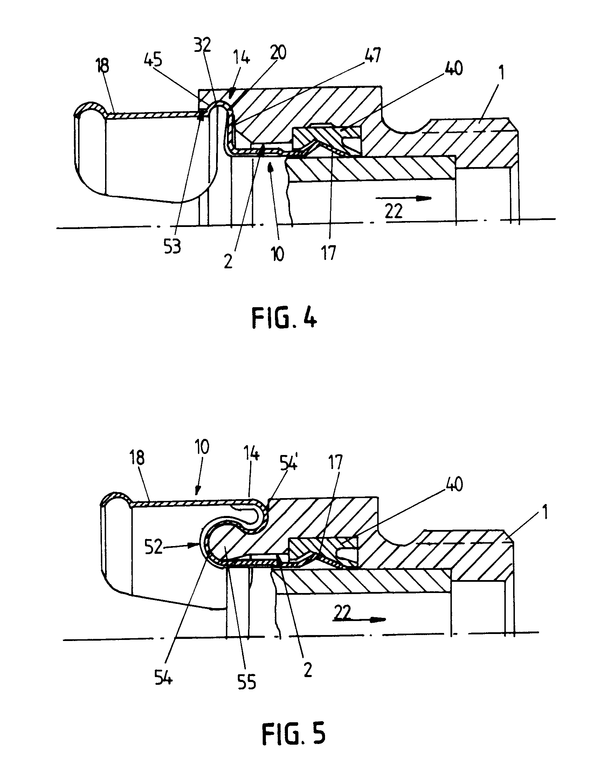

Bei den in den Figuren 4 und 5 abgebildeten Anschlußverbindungsstücken sind entsprechende Bauteile mit identischen Bezugszeichen versehen worden. Außerdem ist der Einfachheit halber nur die eine, oberhalb der Symetrielinie liegende Hälfte des Anschlußverbindungsstückes im Längsschnitt dargestellt.

Von den bisherigen Ausführungsformen unterscheiden sich die Spannzangen der Figuren 4 und 5 durch eine etwas andere Anordnung von Betätigungsarm 18 und Klemmarm 17 beim jeweiligen Spannzangenelement 14, 14'. Im Längsschnitt, wie abgebildet, ist der Betätigungsarm 18 gegenüber dem zugehörigen Klemmarm 17 bereits in dem sich an den Schwenkachsbereich 52 anschließenden Bereich nach radial außen verlagert. Beim Ausführungsbeispiel gemäß Figur 4 ist dazu der Querschnitt der Anschlußöffnung 2 in dem sich entgegen der Einsteckrichtung 22 an die Halteausnehmung 32 axial anschließenden Bereich gegenüber dem sich nach axial innen anschließenden Bereich vergrößert. Dadurch fällt der dem Betätigungsarm 18 zugeordnete Bogenabschnitt 45 des Verbindungsabschnittes 20 etwas kürzer aus als der dem Klemmarm 17 zugeordnete Bogenabschnitt 47. Wie bei allen Ausführungsbeispielen kann der Verbindungsabschnitt 20 ein insbesondere geschlitzter Ringkörper sein oder aber lediglich ein sich ein Stück weit entlang des Umfanges der Einstecköffnung 2 erstreckendes Bogenelement.

Beim Ausführungsbeispiel gemäß Figur 5 ist auf eine Halteausnehmung 32 im Innern der Einstecköffnung 2 verzichtet worden. Hier sind die Klemmarme 17 axial entgegen der Einsteckrichtung 22 aus der Anschlußöffnung 2 herausgeführt, um im Rahmen eines im wesentlichen S-förmigen Verbindungsabschnittes 20' in den zugeordneten Betätigungsarm 18 überzugehen. Der Betätigungsarm 18 ist am einen Ende und der Klemmarm 17 am anderen Ende des S-Bereiches angeformt. Der jeweils radial weiter innen angeordnete S-Bogen 54 ist axial auf den einsteckseitigen Endbereich 55 des Halteteils 1 aufgesteckt oder aufgeschnappt, welcher Endbereich nach Art eines Vorsprunges ausgebildet und sich nur über einen Teil des Umfanges der Anschlußöffnung 2 erstrecken kann. Im Längsschnitt gemäß Figur 5 gesehen ist der Endbereich 55 zweckmäßigerweise entsprechend der Kontur des inneren S-Bogens abgerundet. Wird der Betätigungsarm 18 nach radial innen gedrückt, dann kann sich die gesamte Spannzange im Bereich des Verbindungsabschnittes 20' gegenüber dem Endbereich 55 bewegen, so daß der sich in die Anschlußöffnung 2 fortsetzende Klemmarm 17 nach radial außen gedrückt wird.

Zugunsten eines besseren Biege- bzw. Bewegungsverhaltens erstrecken sich insbesondere der äußere S-Bogen 54' und zweckmäßigerweise auch der innere S-Bogen 54 nur ein Stück weit entlang des Umfanges der Anschlußöffnung 2 und sind z.B. stegförmig ausgebildet, wobei der sich anschließende Klemmarm 17 und/oder Betätigungsarm 18 eine insbesondere größere Umfangserstreckung aufweisen kann.

Um einen sicheren Halt der Spannzange 10 gegenüber dem Halteteil 1 zu gewährleisten, können im Bereich der Verbindungsabschnitte 20, 20' Materialverstärkungen oder -versteifungen vorgesehen sein.

## Patentansprüche

1. Anschlußverbindungsstück zur Verbindung von zur Führung eines Strömungsmediums geeigneten leitungsförmigen Bauteilen (3) wie Druckmittelleitungen, Druckmittelschläuche oder dergleichen untereinander oder mit einem anderen insbesondere pneumatischen Bauelement, mit einem Halteteil (1), das mindestens eine Anschlußöffnung (2) enthält, in die ein anzuschließendes leitungsförmiges Bauteil (3) mit einem Einsteckende (4) lösbar einsteckbar ist, mit einer zum Teil innerhalb der Anschlußöffnung (2) angeordneten, bei eingestecktem Einsteckende (4) am Umfang des entsprechenden leitungsförmigen Bauteils (3) angeordneten Spannzange (10), die zwei einander diametral gegenüberliegende Spannzangenelemente (14, 14') aufweist, die jeweils einen in der Anschlußöffnung (2) angeordneten Klemmarm (17, 17') und in Verlängerung zu diesem einen Betätigungsarm (18, 18') mit einer außerhalb der Anschlußöffnung (2) angeordneten Betätigungspartie (19) aufweisen, wobei alle Spannzangenelemente (14, 14') über einen im Bereich zwischen den Klemmarmen (17, 17') einerseits und den Betätigungsarmen (18, 18') andererseits angeordneten ringförmigen Verbindungsabschnitt (20, 20') derart einstückig miteinander verbunden sind, daß die Klemmarme (17, 17') beim in Richtung zum eingesteckten leitungsförmigen Bauteil (3) erfolgenden Bewegen der Betätigungsarme (18, 18') aus einer zuvor eingenommenen Spannstellung, in der eine an ihnen vorgesehene Klemmpartie (21) nach radial innen gegen ein eingestecktes Einsteckende (4) arbeitet, in eine das Einsteckende (4) zur Entnahme freigebende Freigabestellung verbracht wird, dadurch gekennzeichnet, daß die Spannzange (10) mit ihren Betätigungspartien (19, 19') an der Einsteckseite (13) aus der Anschlußöffnung (2) des Halteteils (1) herausragt, wobei die Betätigungspartien (19, 19') in der Spannstellung der zugeordneten Klemmarme (17, 17') gesehen eine Bewegung nach radial innen erlaubend mit Betätigungsabstand (34) zum Umfang des eingesteckten leitungsförmigen Bauteils (3) angeordnet sind, und daß der als Ringkörper (23) ausgebildete Verbindungsabschnitt (20, 20') eine bogenförmige Querschnittsgestalt hat und sowohl eine Halterungspartie zur unverlierbaren Halterung der Spannzange (10) am Halteteil (1) als auch den Schwenkbereich für die zwischen der Spannstellung und der Freigabestellung bewegbaren Klemmarme (17, 17') bildet, wobei er formschlüssig in bzw. auf einer entsprechenden Halteausnehmung (32) oder einem Vorsprung (55) des Halteteils sitzt und die Betätigungsarme (18, 18') und Klemmarme (17, 17') an den Endbereichen der einander entgegengesetzten Bogenabschnitte (45, 47) des Ringkörpers (23) angeordnet sind.

2. Anschlußverbindungsstück nach Anspruch 1, dadurch gekennzeichnet, daß die Betätigungsarme (18, 18') ausgehend vom Halteteil (1) entgegen der Einsteckrichtung (22) schräg nach radial außen gespreizt sind.

3. Anschlußverbindungsstück nach Anspruch 1 oder 2, dadurch gekennzeichnet, daß der Ringkörper (23) zwischen zwei einander in Umfangsrichtung benachbarten Spannzangenelementen (14, 14') unterbrochen und offen ist, wobei im Bereich der Unterbrechung ein Spalt (33) vorgesehen ist.

4. Anschlußverbindungsstück nach einem der Ansprüche 1 bis 3, dadurch gekennzeichnet, daß der Ringkörper (23) im Querschnitt eine U-, V- oder S-artige Gestalt hat.

5. Anschlußverbindungsstück nach einem der Ansprüche 1 bis 3, dadurch gekennzeichnet, daß die Öffnung des vom bogenförmigen Abschnitt unverschlossenen Ringraumes (25) des Ringkörpers (23) nach radial innen zum eingesteckten Einsteckende (4) weist.

6. Anschlußverbindungsstück nach einem der Ansprüche 1 bis 5, dadurch gekennzeichnet, daß die Spannzange (10) als einstückiges Bauteil ausgebildet ist.

7. Anschlußverbindungsstück nach einem der Ansprüche 1 bis 6, dadurch gekennzeichnet, daß der Ringkörper (23) beim nach radial innen Drücken der Betätigungsarme (18, 18') im Bereich seines sich an die Betätigungsarme (18, 18') anschließenden Bogenabschnittes (45) in Richtung zum gegenüberliegenden Bogenabschnitt (47) federnd tordiert wird.

8. Anschlußverbindungsstück nach einem der Ansprüche 1 bis 7, dadurch gekennzeichnet, daß die Betätigungsarme (18, 18') und/oder die Klemmarme (17, 17') in Umfangsrichtung der Anschlußöffnung (2) gekrümmt sind.

9. Anschlußverbindungsstück nach einem der Ansprüche 1 bis 8, dadurch gekennzeichnet, daß mindestens ein Klemmarm (17, 17') aus mehreren in Umfangsrichtung der Anschlußöffnung (2) nebeneinander angeordneten Klemmsegmenten (48, 48') besteht.

10. Anschlußverbindungsstück nach einem der Ansprüche 1 bis 9, dadurch gekennzeichnet, daß an der Klemmpartie (21) Haltemittel (39) wie Zähne, Verzahnungen, Widerhaken oder dergleichen angeordnet sind.

11. Anschlußverbindungsstück nach einem der Ansprüche 1 bis 10, dadurch gekennzeichnet, daß die Spannzange (10) in der Anschlußöffnung (2) entnehmbar gehaltert ist.

12. Anschlußverbindungsstück nach einem der Ansprüche 1 bis 11, dadurch gekennzeichnet, daß der Verbindungsabschnitt (20) gegenüber den benachbarten Bereichen der Arme (17, 17', 18, 18') der Spannzangenelemente (14, 14') in Radialrichtung mit Bezug zur Anschlußöffnung (2) nach außen vorspringt und mit dem vorspringenden Bereich formschlüssig in einer entsprechenden Halteausnehmung (32) des Halteteils (1) einsitzt.

13. Anschlußverbindungsstück nach einem der Ansprüche 1 bis 11, dadurch gekennzeichnet, daß der Verbindungsabschnitt (20') axial auf dem einen Vorsprung (55) bildenden einsteckseitigen Endbereich des Halteteils (1) aufgesteckt oder aufgeschnappt ist.

14. Anschlußverbindungsstück nach einem der Ansprüche 1 bis 13, dadurch gekennzeichnet, daß in der Anschlußöffnung (2) ein die Spannzange (10) im Bereich der Klemmarme (17, 17') radial außen umgebendes Ringelement (40) angeordnet ist, das in Bewegungsrichtung der Klemmarme (17, 17') elastisch nachgiebig ist und die Klemmarme (17, 17') in Richtung der Spannstellung drückt oder vorspannt.

15. Anschußverbindungsstück nach Anspruch 14, dadurch gekennzeichnet, daß in der Anschlußöffnung (2) den Klemmarmen (17, 17') in Einsteckrichtung (22) vorgelagert ein insbesondere als Lippenring gestalteter Dichtring (50) zur Abdichtung des eingesteckten Einsteckteils (4) gegenüber dem Halteteil (1) angeordnet ist, der zweckmäßigerweise einstückig mit dem Ringelement (40) ausgebildet ist.

16. Anschlußverbindungsstück nach einem der Ansprüche 1 bis 15, dadurch gekennzeichnet, daß die Betätigungs- und/oder Klemmarme (17, 17', 18, 18') der Spannzange (10) federnde Arme sind und zweckmäßigerweise die gesamte Spannzange ein federndes Teil ist, wobei die federnden Bestandteile zweckmäßigerweise aus federndem Material wie Edelstahl-Blech oder Federstahl bestehen.

## Claims

1. Connection piece for the connection of pipe-shaped components (3) suitable for the guidance of a flow medium, such as pressure medium lines, pressure medium hoses or the like, with one another or with any other in particular pneumatic component, having a retaining part (1) containing one or more connection ports (2), into which a pipe-shaped component (3) to be connected is releasably insertable by a plug-in end (4), having a collet (10) partly located within the connection port (2) and, with the plug-in end (4) inserted, located on the circumference of the relevant pipe-shaped component (3), with two diametrically opposite collet elements (14, 14'), each having a clamping arm (17, 17') located in the connection port (2) and as an extension to this an actuating arm (18, 18') with an actuation section (19) located outside the connection port (2), wherein all collet elements (14, 14') are integrally so connected to one another through an annular connecting section (20, 20') located in the area between the clamping arms (17, 17') on the one hand and the actuating arms (18, 18') on the other hand, that the clamping arms (17, 17'), when the actuating arms (18, 18') are moved towards the inserted pipe-shaped component (3) from a previously assumed clamping position, in which a clamping section (21) provided on them acts radially inwards against an inserted plug-in end (4), are brought into a release position enabling the plug-in end (4) to be withdrawn, characterized in that the collet (10) with its actuating sections (19, 19') protrudes at the insertion end (13) from the connection port (2) of the retaining port (1), with the actuating sections (19, 19'), viewed in the clamping position of the assigned clamping arms (17, 17'), arranged so as to permit a radially inwards movement with actuating clearance (34) from the periphery of the inserted pipe-shaped component (3), and that the connecting section (20, 20') designed as an annular body (23) has a curved cross-section and forms both a retaining section for undetachable fastening of the collet (10) to the retaining part (1) and also the field of traverse for the clamping arms (17, 17') movable between the clamping position and the release position, and rests positively engaged in or on a corresponding retaining recess (32) or a projection (55) of the retaining parts, and the actuating arms (18, 18') and clamping arms (17, 17') are located at the ends of the opposing curved sections (45, 47) of the annular body (23).

2. Connection piece according to claim 1, characterized in that the actuating arms (18, 18') originating from the retaining part (1), are spread at an angle radially outwards against the direction of insertion (22).

3. Connection piece according to claims 1 or 2, characterized in that the annular body (23) is interrupted and open between two collet elements (14, 14') adjacent in the circumferential direction, with a gap (33) provided in the area of the interruption.

4. Connection piece according to any of claims 1 to 3, characterized in that the annular body (23) has a U-, V- or S-shaped cross-section.

5. Connection piece according to any of claims 1 to 3, characterized in that the opening of the annular space (25) of the annular body (23) not closed by the curved section points radially inwards to the inserted plug-in end (4).

6. Connection piece according to any of claims 1 to 5, characterized in that the collet (10) is designed as a one-piece component.

7. Connection piece according to any of claims 1 to 6, characterized in that the annular body (23), with radially inwards pressure of the actuating arms (18, 18') in the vicinity of that curved section (45) of it adjacent to the actuating arms (18, 18'), is torsionally sprung in the direction of the opposite curved section (47).

8. Connection piece according to any of claims 1 to 7, characterized in that the actuating arms (18, 18') and/or the clamping arms (17, 17') are curved in the circumferential direction of the connection port (2).

9. Connection piece according to any of claims 1 to 8, characterized in that at least one clamping arm (17, 17') is comprised of several clamping segments (48, 48') mounted next to one another in the circumferential direction of the connection port (2).

10. Connection piece according to any of claims 1 to 9, characterized in that retaining means (39) such as teeth, toothing, barbs or the like are arranged on the clamping section (21).

11. Connection piece according to any of claims 1 to 10, characterized in that the collet (10) is removably mounted in the connection port (2).

12. Connection piece according to any of claims 1 to 11, characterized in that the connecting section (20) relative to the adjacent areas of the arms, (17, 17', 18, 18') of the collet elements (14, 14') protrudes radially outwards relative to the connection port (2) and engages positively with the protruding area in a corresponding retaining recess (32) of the retaining part (1).

13. Connection piece according to any of claims 1 to 11, characterized in that the connecting section (20') is axially slipped over or snapped on to the insertion-side end area of the retaining part (1) forming a projection (55).

14. Connection piece according to any of claims 1 to 13, characterized in that in the connection port (2) is located an annular element (40), radially surrounding the outside of the collet (10) in the area of the clamping arms (17, 17'), which is flexible in the direction of movement of the clamping arms (17, 17') and presses or prestresses the clamping arms (17, 17') in the direction of the clamping position.

15. Connection piece according to claim 14, characterized in that in the connection port (2), ahead of the clamping arms (17, 17') in the direction of insertion (22), is located a seal ring (50) in particular designed as a lip-seal ring, for sealing the inserted plug-in section (4) against the retaining part (1), expediently integral with the annular element (40).

16. Connection piece according to any of claims 1 to 15, characterized in that the actuating and/or clamping arms (17, 17', 18, 18') of the collet (10) are sprung arms and expediently the entire collet is a sprung part, with the sprung elements expediently made of resilient material such as special steel sheet or spring steel.

## Revendications

1. Raccord de branchement pour assembler des composants (3), en forme de conduits, propres à guider un fluide en écoulement, tels que des conduits de fluide sous pression, des tuyaux de fluide sous pression ou similaires, entre eux ou avec un autre élément, en particulier pneumatique, comportant une pièce de maintien (1) qui présente au moins une ouverture de branchement (2) dans laquelle un composant (3) en forme de conduit, à raccorder, peut être inséré, de manière amovible, par une extrémité d'insertion (4), comportant une pince de serrage (10), située en partie à l'intérieur de l'ouverture de branchement (2), située, lorsque l'extrémité d'insertion (4) est insérée, sur le pourtour du composant (3) correspondant en forme de conduit, laquelle pince comporte deux éléments (14, 14') diamétralement opposés l'un à l'autre qui présentent chacun un bras de serrage (17, 17'), placé dans l'ouverture de branchement (2) et, dans le prolongement de celui-ci, un bras d'actionnement (18, 18') avec une partie d'actionnement (19) située à l'extérieur de l'ouverture de branchement (2), dans lequel tous les éléments (14, 14') de la pince de serrage sont reliés entre eux d'un seul tenant, par une partie de liaison (20, 20') annulaire située dans la zone comprise entre les bras de serrage (17, 17') et les bras d'actionnement (18, 18'), de telle sorte que pendant le déplacement des bras d'actionnement (18, 18') en direction du composant (3) en forme de conduit, inséré, les bras de serrage (17, 17') sont amenés à partir d'une position de serrage prise précédemment, dans laquelle une partie de serrage (21), prévue sur ceux-ci, agit radialement vers l'intérieur, contre une extrémité d'insertion (4) insérée, dans une position de libération, libérant l'extrémité d'insertion (4) en vue de son enlèvement, caractérisé en ce que la pince de serrage (10) avec ses parties d'actionnement (19, 19') ressort, sur le côté d'insertion (13), de l'ouverture de branchement (2) de la pièce de maintien (1), les parties d'actionnement (19, 19'), vues dans la position de serrage des bras de serrage (17, 17') associés, étant disposées de manière à permettre un déplacement radialement vers l'intérieur avec une distance d'actionnement (34) par rapport à la périphérie du composant (3) en forme de conduit, inséré, et en ce que la partie de liaison (20, 20'), conçue sous la forme d'un corps annulaire (23), présente une section transversale en forme d'arc et forme une partie de fixation en vue de la fixation imperdable de la pince de serrage (10) sur la pièce de maintien (1) ainsi que la zone de pivotement pour les bras de serrage (17, 17'), déplaçables entre la position de serrage et la position de libération, cette partie de liaison reposant, par concordance de forme, dans ou sur un évidement de maintien (32) correspondant ou une partie saillante (55) de la pièce de maintien et les bras d'actionnement (18, 18') et les bras de serrage (17, 17') étant prévus dans les zones terminales des parties en arc (45, 47), opposées l'une à l'autre, du corps annulaire (23).

2. Raccord de branchement selon la revendication 1, caractérisé en ce que les bras d'actionnement (18, 18'), partant de la pièce de maintien (1), s'écartant obliquement et radialement vers l'extérieur, dans le sens contraire au sens d'insertion (22).

3. Raccord de branchement selon la revendication 1 ou 2, caractérisé en ce que le corps annulaire (23) est interrompu et ouvert entre deux éléments (14, 14') des pinces de serrage, voisins dans la direction périphérique, une fente (33) étant prévue dans la zone d'interruption.

4. Raccord de branchement selon l'une des revendications 1 à 3, caractérisé en ce que le corps annulaire (23) présente une section transversale en U, en V ou S.

5. Raccord de branchement selon l'une des revendications 1 à 3, caractérisé en ce que l'ouverture de l'espace annulaire (25), non fermé par la partie en arc, du corps annulaire (23), est dirigée radialement vers l'intérieur, vers l'extrémité d'insertion (4) insérée.

6. Raccord de branchement selon l'une des revendications 1 à 5, caractérisé en ce que la pince de serrage (10) est un composant d'un seul tenant.

7. Raccord de branchement selon l'une des revendications 1 à 6, caractérisé en ce que le corps annulaire (23) est tordu élastiquement, lorsque les bras d'actionnement (18, 18') sont pressés radialement vers l'intérieur, dans la zone de sa partie en arc (45) se raccordant aux bras d'actionnement (18, 18'), en direction de la partie en arc (47) opposée.

8. Raccord de branchement selon l'une des revendications 1 à 7, caractérisé en ce que les bras d'actionnement (18, 18') et/ou les bras de serrage (17, 17') sont incurvés dans la direction périphérique de l'ouverture de branchement (2).

9. Raccord de branchement selon l'une des revendications 1 à 8, caractérisé en ce qu'un bras de serrage (17, 17') au moins est constitué de plusieurs segments de serrage (48, 48') disposés côte à côte dans la direction périphérique de l'ouverture de branchement (2).

10. Raccord de branchement selon l'une des revendications 1 à 9, caractérisé en ce que des moyens de maintien (39) tels que des dents, dentures, crochets ou similaires, sont prévus sur la partie de serrage (21).

11. Raccord de branchement selon l'une des revendications 1 à 10, caractérisé en ce que la pince de serrage (10) est maintenue de manière amovible dans l'ouverture de branchement (2).

12. Raccord de branchement selon l'une des revendications 1 à 11, caractérisé en ce que la partie de liaison (20) fait saillie vers l'extérieur, par rapport aux zones voisines des bras (17, 17', 18, 18') des éléments (14, 14') de la pince de serrage, en direction radiale, par référence à l'ouverture de branchement (2) et est logée, avec la zone saillante, par concordance de forme, dans un évidement de maintien (32) correspondant de la pièce de maintien (1).

13. Raccord de branchement selon l'une des revendications 1 à 11, caractérisé en ce que la partie de liaison (20') est emboîtée ou clipsée axialement sur la zone terminale de la pièce de maintien (1), côté insertion, formant une partie saillante (55).

14. Raccord de branchement selon l'une des revendications 1 à 13, caractérisé en ce qu'il est prévu, dans l'ouverture de branchement (2), un élément annulaire (40), entourant radialement de l'extérieur la pince de serrage (10), dans la zone des bras de serrage (17, 17'), lequel élément annulaire est élastiquement souple dans la direction de déplacement des bras de serrage (17, 17') et presse ou précontraint les bras de serrage (17, 17') en direction de la position de serrage.

15. Raccord de branchement selon la revendication 14, caractérisé en ce qu'une bague d'étanchéité (50), conçue en particulier sous la forme d'une lèvre annulaire, servant à assurer l'étanchéité de la pièce de la partie d'insertion (4) insérée, par rapport à la pièce de maintien (1), est placée dans l'ouverture de branchement (2), devant les bras de serrage (17, 17') dans le sens d'insertion (22) et est avantageusement réalisée d'une seule pièce avec l'élément annulaire (40).

16. Raccord de branchement selon l'une des revendications 1 à 15, caractérisé en ce que les bras d'actionnement et/ou de serrage (17, 17', 18, 18') de la pince de serrage (10) sont des bras formant ressort et, d'une manière avantageuse, toute la pince de serrage est un élément formant ressort, les parties constitutives formant ressort étant avantageusement réalisées dans un matériau élastique tel qu'une tôle d'acier spécial ou de l'acier à ressort.
